# EUROPÄISCHE PATENTSCHRIFT

(11) **EP 1 102 086 B1**
(45) Veröffentlichungstag und Bekanntmachung des Hinweises auf die Patenterteilung: **13.01.2010**
(21) Anmeldenummer: 00124714.7
(22) Anmeldetag: 13.11.2000
(51) Int. Cl.: G01S 7/481, G01B 11/24, G01S 17/42, G01S 17/89

(54) **Optoelektronische Vorrichtung**
Opto-electronic device
Dispositif opto-électronique

(30) Priorität: 15.11.1999 DE 29919989 U
(43) Veröffentlichungstag der Anmeldung: 23.05.2001
(73) Patentinhaber: Leuze electronic GmbH + Co. KG, 73277 Owen/Teck (DE)
(72) Erfinder: Keinath, Armin, Dr., 72581 Dettingen (DE); Wörner, Jörg, 73235 Weilheim (DE); Droemer, Jörg, 72574 Bad Urach (DE); Müller, Thomas, 73262 Reichenbach/Fils (DE)
(74) Vertreter: Ruckh, Rainer Gerhard

(56) Entgegenhaltungen:
- EP-A- 0 619 502
- EP-A- 0 766 101
- WO-A-98/44782
- DE-C- 4 405 376
- DE-C- 19 601 661

## Beschreibung

Die Erfindung betrifft eine optoelektronische Vorrichtung gemäß dem Oberbegriff des Anspruchs 1.

Eine derartige optoelektronische Vorrichtung ist aus der DE 44 05 376 C1 bekannt. Diese Vorrichtung weist einen Sendelichtstrahlen emittierenden Sender und einen Empfangslichtstrahlen empfangenden Empfänger auf, welche einen nach dem Phasenmessprinzip arbeitenden Distanzsensor bilden. Die Sendelichtstrahlen werden über eine Ablenkeinheit abgelenkt, so dass diese einen in einer Ebene liegenden Überwachungsbereich überstreichen. Die Ablenkeinheit weist hierzu einen rotierenden Drehspiegel auf, über welchen die Sendelichtstrahlen und Empfangslichtstrahlen geführt sind. Mittels eines Winkelgebers wird die Position des Drehspiegels und damit der momentane Ablenkwinkel der Sendelichtstrahlen erfasst. Aus den Distanzwerten am Ausgang des Distanzsensors sowie der Ausgangssignalen des Winkelgebers kann die Position von Gegenständen im Überwachungsbereich ermittelt werden. Insbesondere kann auch das Höhenprofil von Gegenständen im Überwachungsbereich erfasst werden, in dem deren Oberfläche von den Sendelichtstrahlen abgetastet wird.

Bei dieser Vorrichtung weist die Ablenkeinheit mit dem rotierenden Drehspiegel ein bewegtes Teil mit relativ großer Masse auf. Dies ist insbesondere dann von Nachteil, wenn die Vorrichtung an Arbeitsmaschinen beispielsweise im Außenbereich eingesetzt wird. An derartigen Arbeitsmaschinen treten starke Vibrationen auf, die sich auf die optoelektronische Vorrichtung übertragen können, wodurch Fehlmessungen oder gar Funktionsstörungen oder Ausfälle der Vorrichtung verursacht werden können.

Desweiteren werden bei dieser Vorrichtung die Sende- und Empfangslichtstrahlen koaxial verlaufend über den Drehspiegel geführt. Dies ist dann vorteilhaft, wenn insbesondere im Nahbereich unmittelbar vor der Vorrichtung Gegenstände detektiert werden sollen. Soll jedoch die Vorrichtung im Außenbereich zur Bestimmung von Konturen von Gegenständen eingesetzt werden, die in größerer Entfernung zur Vorrichtung angeordnet sind, so kann die hohe Empfindlichkeit der Vorrichtung im Nahbereich von Nachteil sein. Dies ist insbesondere dann der Fall, wenn die Vorrichtung auf einem Arbeitsgerät installiert wird, in dessen Umgebung Staubentwicklungen auftreten können. Dann wird von diesem Staub unmittelbar vor der Vorrichtung ein Teil der Sendelichtstrahlen in die Vorrichtung zurückgestreut und führt so zu Messwertverfälschungen bei der Distanzmessung.

Eine gattungsgemäße optoelektronische Vorrichtung ist aus der EP 0 766 101 A2 bekannt. Diese bildet einen optischen Scanner, mittels dessen durch optische Distanzmessungen Höhenprofile von Gegenständen bestimmt werden. Als optischen Umlenkmittel zur Ablenkung der von einem Sender emittierten Sendelichtstrahlen sind eine motorisch getriebene optische Scheibe mit einem Array von Reflektoren sowie Umlenkspiegel vorgesehen. Mit diesen Umlenkspiegeln werden die Sendelichtstrahlen vom Gegenstand rückreflektierten und auf einen Empfänger geführten Empfangslichts getrennt.

Der Erfindung liegt die Aufgabe zugrunde, eine Vorrichtung der eingangs genannten Art so auszubilden, dass diese möglichst unempfindlich gegen äußere Störeinflüsse ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Bestimmung des Höhenprofils eines Gegenstands und umfasst einen Sendelichtstrahlen emittierenden Sender und einen Empfangslichtstrahlen empfangenden Empfänger aufweisenden Distanzsensor und eine Ablenkeinheit. Mittels der Ablenkeinheit sind die Sendelichtstrahlen periodisch abgelenkt und über die Oberfläche des Gegenstands geführt. In einer Auswerteeinheit wird aus den Distanzwerten am Ausgang des Distanzsensors und aus den zugehörigen Ablenkwinkeln der Sendelichtstrahlen das Höhenprofil des Gegenstands bestimmt. Die Ablenkeinheit weist eine dem Sender nachgeordnete Sendeoptik und einen Aktor auf, welcher zur Ablenkung der Sendelichtstrahlen die Sendeoptik periodisch auslenkt. Dem Empfänger ist eine Empfangsoptik vorgeordnet, welche in Abstand zur Sendeoptik angeordnet ist, so dass die Strahlachsen der die Sendeoptik durchsetzenden Sendelichtstrahlen und der die Empfangsoptik durchsetzenden Empfangslichtstrahlen in Abstand zueinander verlaufen. Die Empfangsoptik wird über den Aktor gemeinsam mit der Sendeoptik ausgelenkt. Die Sendeoptik und die Empfangsoptik sind mit parallel verlaufenden optischen Achsen in einer Halterung gelagert, welche über den Aktor ausgelenkt wird. Der Aktor weist eine motorisch getriebene Exzenterscheibe auf, deren Rand in einer Ausnehmung der Haltering anliegt. Durch die Bewegung der Exzenterscheibe ist die Halterung in Längsrichtung ausgelenkt.

Ein wesentlicher Vorteil der erfindungsgemäßen Vorrichtung besteht darin, dass zur Ablenkung der Sendelichtstrahlen die Sendeoptik über den Aktor ausgelenkt wird, wobei dabei die Sendeoptik eine zwangsgeführte Bewegung ausführt, die unempfindlich gegen Erschütterungen der Vorrichtung ist.

Weiterhin ist vorteilhaft, dass die über die Sendeoptik geführten Sendelichtstrahlen in Abstand zu den durch eine Empfangsoptik geführten Empfangslichtstrahlen verlaufen. Durch eine geeignete Wahl des Basisabstands zwischen Sende- und Empfangsoptik ist die Vorrichtung unempfindlich gegen Störeinflüsse im Nahbereich, insbesondere gegen Staubentwicklungen in der unmittelbaren Umgebung der optoelektronischen Vorrichtung. Dies beruht darauf, dass aus dem Nahbereich zurückgesteuerte Sendelichtstrahlen aufgrund des Abstands zwischen Sende- und Empfangsoptik nicht auf den Empfänger treffen und somit dort nicht zu Fehlmessungen führen.

Die Erfindung wird im nachstehenden anhand der Zeichnungen erläutert. Es zeigen:
- Figur 1:: Frontansicht der in einem Gehäuse angeordneten erfindungsgemäßen optoelektronischen Vorrichtung.
- Figur 2:: Draufsicht auf die Vorrichtung gemäß Figur 1 bei abgenommenem Gehäusedeckel.
- Figur 3:: Schematische Darstellung eines Ausschnitts der Vorrichtung gemäß Figuren 1 und 2.
- Figur 4:: Ausführungsbeispiel eines Aktors für die Vorrichtung gemäß den Figuren 1 bis 3.

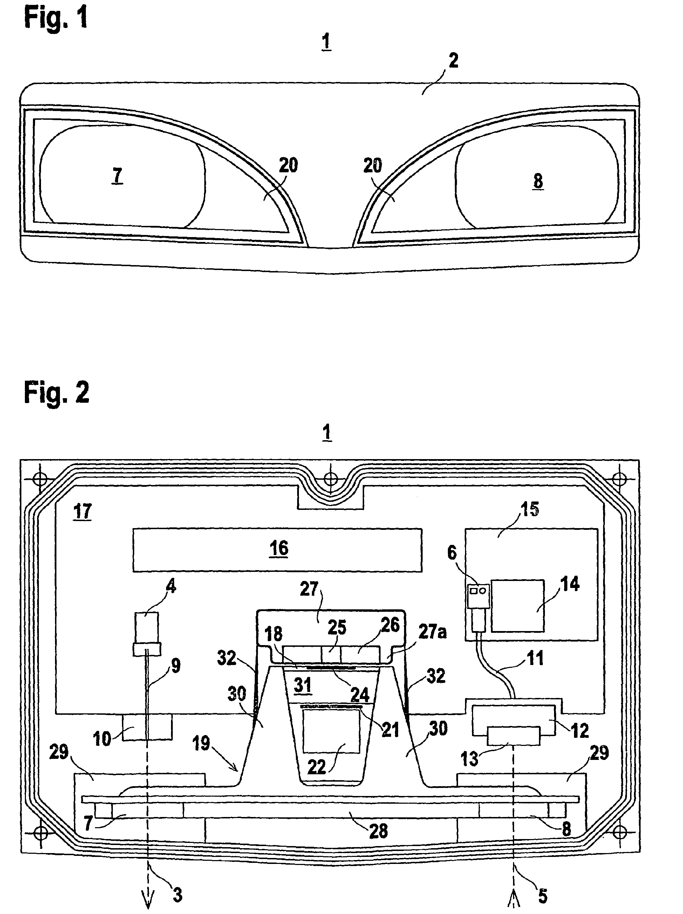

In den Figuren 1 und 2 ist ein Ausführungsbeispiel einer optoelektronischen Vorrichtung 1 zur Bestimmung des Höhenprofils eines Gegenstands dargestellt. Die optoelektronische Vorrichtung 1 wird dabei vorzugsweise im Außenbereich eingesetzt, um beispielsweise Profile von Gebäuden zu erfassen. Dabei kann die optoelektronische Vorrichtung 1 auf einem Arbeitsgerät, wie beispielsweise einem Fahrzeug angeordnet sein.

Die optoelektronische Vorrichtung 1 ist in einem Gehäuse 2 integriert, welches vorzugsweise aus Metall besteht und somit unempfindlich gegen mechanische Belastungen ist.

Die einzelnen optischen und elektronischen Komponenten der optoelektronischen Vorrichtung 1 sind auf dem Gehäuseboden des Gehäuses 2 montiert. Das Gehäuse 2 ist mit einem Gehäusedeckel abschließbar, welcher auf dem Gehäuseboden aufsitzt.

Die optoelektronische Vorrichtung 1 weist einen Distanzsensor mit einem Sendelichtstrahlen 3 emittierenden Sender 4 und einem Empfangslichtstrahlen 5 empfangenden Empfänger 6 auf. Die Distanzmessung erfolgt vorzugsweise nach dem Laufzeitprinzip. Hierzu wird der Sender 4 im Pulsbetrieb betrieben, so dass der Sender 4 Sendelichtimpulse mit einem vorgegebenen Puls-Pausenverhältnis emittiert. Entsprechend treffen auf den Empfänger 6 von den Gegenständen zurückreflektierte Empfangslichtimpulse auf. Zur Distanzmessung werden dann die Laufzeiten der zum Gegenstand geführten Sendelichtimpulse und vom Gegenstand zum Empfänger 6 zurückreflektierten Empfangslichtimpulse gemessen.

Dem Sender 4 ist im Strahlengang der Sendelichtstrahlen 3 eine Sendeoptik 7 nachgeordnet, welche zur Strahlformung der Sendelichtstrahlen 3 dient. Ebenso ist dem Empfänger 6 eine Empfangsoptik 8 vorgeordnet, welche die Empfangslichtstrahlen 5 auf den Empfänger 6 führt. Die Sende- 7 und Empfangsoptik 8 sind jeweils von einer Linse 13 gebildet.

Im vorliegenden Ausführungsbeispiel werden die Sendelichtimpulse vom Sender 4 in eine erste Lichtleitfaser 9 eingekoppelt. Das freie Ende der Lichtleitfaser 9 ist auf einer auf dem Gehäuseboden aufsitzenden metallischen Aufnahme 10 gelagert und steht der Sendeoptik 7 in Abstand gegenüber.

Entsprechend führt vom Empfänger 6 eine zweite Lichtleitfaser 11 in Richtung der Empfangsoptik 8. Das freie Ende der Lichtleitfaser 11 ist an einer zweiten metallischen Aufnahme 12 gelagert und steht der Empfangsoptik 8 in Abstand gegenüber. Vor dem freien Ende der Lichtleitfaser 11 ist eine kleine Linse 13 angeordnet, die die Empfangslichtimpulse, welche die Empfangsoptik 8 durchsetzen in die Lichtleitfaser 11 einkoppeln.

Der Empfänger 6 und eine diesem zugeordnete Auswerteelektronik 14 sind von einer elektrischen Abschirmung 15 umgeben, die vorzugsweise von einem Blechstanzteil gebildet ist.

Der Sender 4, der Empfänger 6, die diesem zugeordnete Auswerteelektronik 14 sowie eine Auswerteeinheit 16 mit mehreren nicht separat dargestellten elektronischen Bauteilen wie beispielsweise einen Microcontroller, sind auf einer Leiterplatte 17 montiert, die auf dem Gehäuseboden aufsitzt.

Der Sender 4 mit der Sendeoptik 7 und der Empfänger 6 mit der Empfangsoptik 8 sind in Abstand quer zur Strahlachse der Sende- 3 und Empfangslichtstrahlen 5 angeordnet. Dadurch verlaufen die Strahlachsen der Sendelichtstrahlen 3 und der Empfangslichtstrahlen 5 in einem vorgegebenen Abstand zueinander, wodurch die Vorrichtung 1 gegenüber Störeinflüssen im Nahbereich unempfindlich ist. Durch einen hinreichend großen Basisabstand gelangen nur Sendelichtstrahlen 3 zum Empfänger 6, die von Gegenständen zurückreflektiert werden, die in hinreichend großen Abständen zur Vorrichtung 1 angeordnet sind.

Ist die Vorrichtung 1 beispielsweise an einem Arbeitsgerät montiert, durch welches eine Staubentwicklung verursacht wird, so wird durch dicht vor der Vorrichtung 1 aufgewirbelten Staub ein Teil der Sendelichtstrahlen 3 zwar gestreut, gelangt jedoch aufgrund des großen Basisabstandes zwischen Sende- 7 und Empfangsoptik 8 nicht zum Empfänger 6, so dass die Distanzmessung zur Vermessung von Gegenständen nicht beeinträchtigt wird.

Zur Erfassung des Höhenprofils eines Gegenstands werden die Sendelichtstrahlen 3 über eine Ablenkeinheit periodisch abgelenkt, so dass diese innerhalb eines vorgegebenen Winkelbereichs über die Oberfläche des Gegenstands geführt sind. Im vorliegenden Ausführungsbeispiel beträgt der von den Sendelichtstrahlen 3 überstrichene Winkelbereich etwa ± 6°.

In der Auswerteeinheit 16 werden fortlaufend die vom Distanzsensor ausgegebenen Distanzwerte und die momentanen Ablenkwinkel der Sendelichtstrahlen 3 erfasst. Aus diesen Daten wird das Höhenprofil des Gegenstands berechnet.

Die Ablenkeinheit umfasst im wesentlichen einen Aktor 18, mittels dessen die Sendeoptik 7 in horizontaler Richtung und im wesentlichen quer zur Strahlachse der Sendelichtstrahlen 3 periodisch ausgelenkt wird.

Durch diese Auslenkbewegung der Sendeoptik 7 werden die Sendelichtstrahlen 3 in einer horizontalen, parallel zum Gehäuseboden verlaufenden Ebene abgelenkt.

Im einfachsten Fall wird über den Aktor 18 nur die Sendeoptik 7 ausgelenkt, während die Empfangsoptik 8 stationär angeordnet ist.

Im vorliegenden Ausführungsbeispiel sind die Sendeoptik 7 und die Empfangsoptik 8 in einer Halterung 19 gelagert und somit starr miteinander verbunden.

Über den Aktor 18 werden die Halterung 19 und damit die Sende- 7 und Empfangsoptik 8 gemeinsam ausgelenkt. Auf diese Weise wird die durch die Ablenkbewegung verursachte Richtungsänderung der Sendelichtstrahlen 3 in gleicher Weise auch für die Empfangslichtstrahlen 5 erhalten.

Im vorliegenden Ausführungsbeispiel sind die Sende- 7 und Empfangsoptik 8 in einer horizontalen Ebene liegend in Abstand nebeneinander liegend angeordnet, wobei die optischen Achsen der Sende- 7 und Empfangsoptik 8 parallel verlaufen. Prinzipiell könnte die Halterung 19 auch so angeordnet sein, dass die Sende- 7 und Empfangsoptik 8 übereinander liegend angeordnet sind, wobei dann auch die Ablenkbewegung in vertikaler Richtung erfolgt.

Wie insbesondere aus Figur 2 ersichtlich ist, sind die Sende- 7 und Empfangsoptik 8 jeweils in geringem Abstand hinter einem Austrittsfenster 20 in der Frontwand des Gehäuses 2 angeordnet.

Die Größen der Austrittsfenster 20 sind dabei an die Durchmesser der Sende- 7 und Empfangsoptik 8 angepasst. Zudem sind die Austrittsfenster 20 so dimensioniert, dass für jede Position der Sende- 7 und Empfangsoptik 8 jeweils nahezu deren gesamte Fläche hinter dem zugeordneten Austrittsfenster 20 liegt. Somit wird nur ein geringer Teil der Flächen der Sende- 7 und Empfangsoptik 8 durch die Gehäusewand abgeschattet.

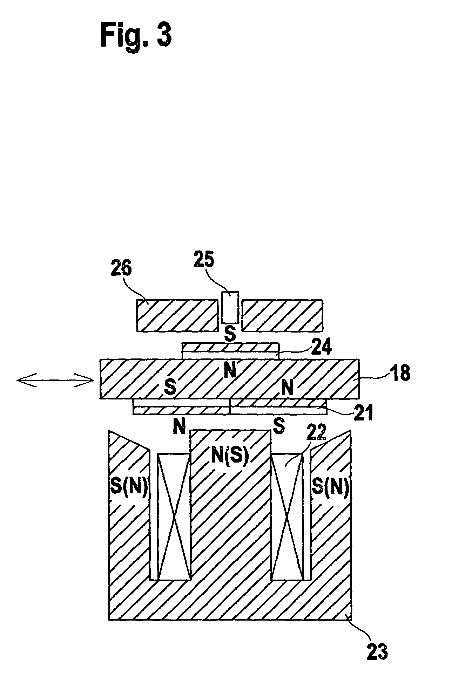

Der Aufbau eines Beispiels des Aktors 18, mittels dessen die an der Halterung 19 befestigte Sendeoptik 7 und Empfangsoptik 8 ausgelenkt werden, ist in Figur 3 detailliert dargestellt.

Der Aktor 18 ist stabförmig ausgebildet, wobei an einer seiner Längsseiten ein erster Permanentmagnet 21 aufgebracht ist. Diese Längsseite des Aktors 18 mit dem Permanentmagneten 21 liegt einer Spule 22 gegenüber, die in einem Eisenkern 23 gelagert ist. Durch die Spule 22 fließt ein zeitlich veränderlicher Strom, der ein magnetisches Wechselfeld generiert. Dadurch werden wie in Figur 3 dargestellt, die Enden des Eisenkerns 23, welche dem Aktor 18 gegenüber liegen, in einem vorgegebenen Zeittakt unterschiedlich polarisiert. Die verschiedenen Polaritäten sind mit N und S in Figur 3 gekennzeichnet. Dabei weisen die beiden äußeren Enden des Eisenkerns 23 jeweils immer dieselbe Polarität und das mittlere Ende des Eisenkerns 23 die dem entgegengesetzte Polarität auf. Dadurch wird der Aktor 18 periodisch in Richtung seiner Längsachse hin- und herbewegt. Zweckmäßigerweise ist der Spulenstrom in der Spule 22 über einen Regelkreis geregelt, womit die Längsbewegung des Aktors 18 stabilisiert wird.

An der zweiten Längsseite des Aktors 18 ist ein weiterer Permanentmagnet 24 angeordnet. Zur Bestimmung der aktuellen Position des Aktors 18 liegt die Längsseite des Aktors 18 mit dem Permanentmagneten 24 einem Hallsensor 25 gegenüber, welcher in einer Ummantelung 26 gelagert ist.

Die Spule 22 mit dem Eisenkern 23 ist auf einem nicht dargestellten metallischen Sockel gelagert, der vom Gehäuseboden senkrecht absteht. Der Hallsensor 25 sitzt auf einem, an der Frontseite einer metallischen Platte 27 ausmündenden Vorsprung 27 a auf. Der mit der Platte 27 einstückige Vorsprung 27 a steht senkrecht vom Gehäuseboden ab.

Zwischen dem Vorsprung 27 a mit der Platte 27 einerseits und der auf dem Sockel angebrachten Spule 22 mit dem Eisenkern 23 verbleibt ein Zwischenraum, in welchem der Aktor 18 bewegt wird. Dabei ist die Länge des Zwischenraums an die Länge des Aktors 18 angepasst. Die Breite des Zwischenraums ist geringfügig größer als die Breite des Aktors 18.

Auf dem Hallsensor 25 sitzt eine nicht dargestellte Leiterplatte 17 mit einer Auswerteelektronik auf, welche an die Auswerteeinheit 16 angeschlossen ist.

An den Aktor 18 ist die Halterung 19 befestigt, die zur Aufnahme der Sende- 7 und Empfangsoptik 8 dient. Hierzu weist die Halterung 19, die aus einem Kunststoff-Spritzteil besteht, eine Frontscheibe 28 auf. Dort sind Aufnahmen mit kreisförmige Ausnehmungen 33 vorgesehen, in welchen die Sende- 7 und Empfangsoptik 8 eingesetzt werden und mittels nicht dargestellten Rastmitteln befestigt werden. Die Vorderseite der Frontscheibe 28 verläuft im wesentlichen in einer Ebene parallel zur Frontwand des Gehäuses 2. Die Unterseite der Halterung 19 liegt in Abstand zum Boden des Gehäuses 2 bzw. zu darauf aufsitzenden flächigen Elementen 29.

An der Rückseite der Frontscheibe 28 der Halterung 19 münden zwei parallel in Abstand zueinander verlaufende Verstrebungen 30 aus. Die Verstrebungen 30 erstrecken sich über die gesamte Höhe der Frontscheibe 28 und verlaufen senkrecht zur Ebene der Frontscheibe 28. Die freien Enden der Verstrebungen 30 sind über einen Steg 31 verbunden, an welchem der Aktor 18 befestigt ist. Zweckmäßigerweise weist der Steg 31 zwei Arme auf, zwischen welchen der Aktor 18 liegt.

Zwischen den Verstrebungen 30 liegt die Spule 22 mit Eisenkern 23, die auf dem Sockel aufsitzen und einen Anschlag für die Verstrebungen 30 bilden, so dass dadurch die Bewegung der Halterung 19 begrenzt wird.

Die Halterung 19 ist mittels zweier Blattfedern 32 an der eine Aufnahme bildenden Platte 27 beweglich gelagert. Die Blattfedern 32 sind von biegbaren Blechteilen gebildet, welche jeweils einen rechteckigen Querschnitt aufweisen. Die ebenen Ober- und Unterseiten der Blattfedern 32 verlaufen jeweils senkrecht zur Frontscheibe 28 und sind an deren Rückseite befestigt. Die Blattfedern 32 verlaufen jeweils in geringem Abstand zu den Außenseiten der Verstrebungen 30.

Durch die über den Spulenstrom der Spule 22 bewirkte Längsbewegung des Aktors 18 werden die Blattfedern 32 gebogen und die Frontscheibe 28 in Längsrichtung parallel zur Frontwand des Gehäuses 2 bewegt. Die Federkräfte der Blattfedern 32 bewirken Rückstellkräfte, welche der Bewegung der Frontscheibe 28, die durch den Aktor 18 verursacht wird, entgegen wirkt. Durch die Regelung des Spulenstroms wird vermieden, dass in diesem System Schwingungen auftreten, so dass die Frontscheibe 28 eine kontinuierliche periodische Längsbewegung ausführt.

Durch die Bewegung der Frontscheibe 28 wird die Sendeoptik 7 relativ zur Strahlachse der auftreffenden Sendelichtstrahlen 3 verschoben. Durch die unterschiedlichen Auftreffpunkte der Sendelichtstrahlen 3 auf die Sendeoptik 7 ergibt sich eine entsprechend unterschiedliche Fokussierung der Sendelichtstrahlen 3, wodurch die gewünschte Strahlablenkung bewirkt wird.

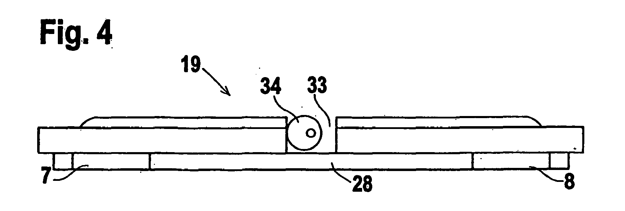

Figur 4 zeigt ein Ausführungsbeispiel des Aktors 18. In Figur 4 ist dabei ein Teil der Halterung 19 dargestellt, an der die nicht dargestellten Blattfedern 32 befestigt sind.

Die Auslenkung der Halterung 19 in Längsrichtung erfolgt mittels einer in einer Ausnehmung 33 der Halterung 19 liegenden Exzenterscheibe 34. Alternativ kann die Exzenterscheibe 34 zwischen den nicht dargestellten Verstrebungen 30 der Halterung 19 angeordnet sein. Die Exzenterscheibe 34 ist horizontal liegend um eine Drehachse drehbar gelagert und wird mittels eines nicht dargestellten Motors angetrieben. Der Rand der Exzenterscheibe 34 liegt an einer Innenwand der Ausnehmung 33 an. Durch die Drehbewegung der Exzenterscheibe 34 wird die Halterung 19, die an den Blattfedern 32 gelagert ist, in Längsrichtung ausgelenkt. Die Exzenterscheibe 34 kann zum einen mittels eines Gleichstrommotors angetrieben werden. In diesem Fall führt die Exzenterscheibe 34 eine kontinuierliche Drehbewegung aus. Für den Fall, dass die Exzenterscheibe 34 mittels eines Schrittmotors angetrieben ist, kann auch die Exzenterscheibe 34 periodisch innerhalb eines vorgegebenen Winkelbereichs bewegt werden.

Zur Bestimmung der Position des Schrittmotors kann eine nicht dargestellte Lichtschranke vorgesehen sein.

## Patentansprüche

1. Optoelektronische Vorrichtung zur Bestimmung des Höhenprofils eines Gegenstands mit einem einen Sendelichtstrahlen emittierenden Sender und einen Empfangslichtstrahlen empfangenden Empfänger aufweisenden Distanzsensor und mit einer Ablenkeinheit, mittels derer die Sendelichtstrahlen periodisch abgelenkt und über die Oberfläche des Gegenstands geführt sind, wobei in einer Auswerteeinheit aus den Distanzwerten am Ausgang des Distanzsensors und aus den zugehörigen Ablenkwinkeln der Sendelichtstrahlen das Höhenprofil des Gegenstands bestimmt wird, wobei die Ablenkeinheit eine dem Sender nachgeordnete Sendeoptik und einen Aktor aufweist, welcher zur Ablenkung der Sendelichtstrahlen die Sendeoptik periodisch ausgelenkt, und wobei dem Empfänger eine Empfangsoptik vorgeordnet ist, welche in Abstand zur Sendeoptik angeordnet ist, so dass die Strahlachsen der die Sendeoptik durchsetzenden Sendelichtstrahlen und der die Empfangsoptik durchsetzenden Empfangslichtstrahlen in Abstand zueinander verlaufen, **dadurch gekennzeichnet, dass** die Empfangsoptik (8) über den Aktor (18) gemeinsam mit der Sendeoptik (7) ausgelenkt wird, wobei die Sendeoptik (7) und die Empfangsoptik (8) mit parallel verlaufenden optischen Achsen in einer Halterung (19) gelagert sind, welche über den Aktor (18) ausgelenkt wird, und dass der Aktor (18) eine motorisch getriebene Exzenterscheibe (34) aufweist, deren Rand in einer Ausnehmung (33) der Halterung (19) anliegt, wobei durch die Bewegung der Exzenterscheibe (34) die Halterung (19) quer zur Strahlachse der Sendelichtstrahlen (3) ausgelenkt ist.

2. Optoelektronische Vorrichtung nach Anspruch 1, **dadurch gekennzeichnet, dass** die Exzenterscheibe (34) mittels eines Gleichstrommotors angetrieben ist und **dadurch** eine kontinuierliche Drehbewegung ausführt.

3. Optoelektronische Vorrichtung nach Anspruch 1, **dadurch gekennzeichnet, dass** die Exzenterscheibe (34) mittels eines Schrittmotors angetrieben ist und **dadurch** periodisch innerhalb eines vorgegebenen Winkelbereichs bewegt wird.

4. Optoelektronische Vorrichtung nach einem der Ansprüche 1 bis 3, **dadurch gekennzeichnet, dass** die Halterung (19) eine Frontscheibe (28) aufweist, in welcher die Sendeoptik (7) und die Empfangsoptik (8) jeweils in einer Ausnehmung (33) in Abstand nebeneinanderliegend gelagert sind.

5. Optoelektronische Vorrichtung nach Anspruch 4, **dadurch gekennzeichnet, dass** an der Rückseite der Frontscheibe (28) der Halterung (19) in Abstand zueinander verlaufende Verstrebungen (30) ausmünden, deren freie Enden über einen Steg (31) verbunden sind, an welchem der Aktor (18) befestigt ist.

6. Optoelektronische Vorrichtung nach Anspruch 5, **dadurch gekennzeichnet, dass** die Verstrebungen (30) im wesentlichen im rechten Winkel an der Frontscheibe (28) der Halterung (19) ausmünden, und dass die Längsachsen der Frontscheibe (28) und des Stegs (31) parallel zueinander verlaufen.

7. Optoelektronische Vorrichtung nach einem der Ansprüche 1 bis 6, **dadurch gekennzeichnet, dass** die Halterung (19) von einem KunststoffSpritzteil gebildet ist.

8. Optoelektronische Vorrichtung nach einem der Ansprüche 1 bis 7, **dadurch gekennzeichnet, dass** die Halterung (19) mittels Blattfedern (32) an einer Aufnahme beweglich gelagert ist.

9. Optoelektronische Vorrichtung nach Anspruch 8, **dadurch gekennzeichnet, dass** die Blattfedern (32) von biegbaren Blechteilen mit rechteckigem Querschnitt gebildet sind, deren ebene Ober- und Unterseiten jeweils im wesentlichen senkrecht zur Frontscheibe (28) der Halterung (19) verlaufen.

10. Optoelektronische Vorrichtung nach einem der Ansprüche 8 oder 9, **dadurch gekennzeichnet, dass** die Aufnahme, an der die Blattfedern (32) befestigt sind, von einer parallel zur Frontwand der Halterung (19) verlaufenden Platte (27) gebildet ist.

11. Optoelektronische Vorrichtung nach einem der Ansprüche 4 bis 10, **dadurch gekennzeichnet, dass** diese in einem Gehäuse (2) integriert ist, wobei die Frontscheibe (28) der Halterung (19) hinter der Frontwand des Gehäuses (2) liegend angeordnet ist, in welcher zwei Austrittsfenster (20) gelagert sind, wobei jeweils ein Austrittsfenster (20) der Sendeoptik (7) und der Empfangsoptik (8) gegenüberliegt.

12. Optoelektronische Vorrichtung nach Anspruch 11, **dadurch gekennzeichnet, dass** die Größen der Austrittsfenster (20) an die Durchmesser der Sendeoptik (7) und der Empfangsoptik (8) sowie deren maximale Verschiebewege angepasst sind, so dass in jeder Position der Halterung (19) jeweils wenigstens nahezu die gesamte Fläche der Sende- (7) und Empfangsoptik (8) hinter dem Austrittsfenster (20) liegend angeordnet ist.

13. Optoelektronische Vorrichtung nach einem der Ansprüche 1 bis 12, **dadurch gekennzeichnet, dass** mit den Sendelichtstrahlen (3) ein Winkelbereich von etwa ± 6° überstrichen wird.

14. Optoelektronische Vorrichtung nach einem der Ansprüche 1 bis 13, **dadurch gekennzeichnet, dass** zur Bestimmung des momentanen Ablenkwinkels der Sendelichtstrahlen (3) die Position des Aktors (18) mittels eines Sensors erfassbar ist.

15. Optoelektronische Vorrichtung nach Anspruch 14, **dadurch gekennzeichnet, dass** der Sensor von einer Lichtschranke gebildet ist.

16. Optoelektronische Vorrichtung nach Anspruch 14, **dadurch gekennzeichnet, dass** der Sensor von einem Hallsensor gebildet ist, mit welchem ein auf dem Aktor (18) angeordneter Permanentmagnet (24) detektierbar ist.

17. Optoelektronische Vorrichtung nach Anspruch 16, **dadurch gekennzeichnet, dass** der Hallsensor (25) mit einer Auswerteelektronik an der Platte (27) zur Befestigung der Blattfedern (32) montiert ist.

18. Optoelektronische Vorrichtung nach einem der Ansprüche 1 bis 17, **dadurch gekennzeichnet, dass** der Sender (4) Sendelichtimpulse emittiert, wobei zur Distanzmessung die Laufzeiten der Sendelichtstrahlen zum Gegenstand bestimmt werden.

19. Optoelektronische Vorrichtung nach einem der Ansprüche 1 bis 18, **dadurch gekennzeichnet, dass** die Empfangslichtstrahlen (5) in eine Lichtleitfaser (11) eingekoppelt werden, wobei die Empfangslichtstrahlen (5) in der Lichtleitfaser (11) zu dem von einer elektrischen Abschirmung (15) umgebenen Empfänger (6) geführt sind.

20. Optoelektronische Vorrichtung nach einem der Ansprüche 1 bis 19, **dadurch gekennzeichnet, dass** der Sender (4), der Empfänger (6) und elektronische Bauelemente der Auswerteeinheit (16) auf einer Leiterplatte (17) angeordnet sind, die auf dem Gehäuseboden aufsitzt.

21. Optoelektronische Vorrichtung nach einem der Ansprüche 11 bis 20, **dadurch gekennzeichnet, dass** Elemente des Aktors (18) auf dem Gehäuseboden aufsitzen.

22. Optoelektronische Vorrichtung nach einem der Ansprüche 20 oder 21, **dadurch gekennzeichnet, dass** das Gehäuse (2) aus Metall besteht.

## Claims

1. Optoelectronic device for determining the height profile of an object by a distance sensor, which comprises a transmitter emitting transmitted light beams and a receiver receiving received light beams, and with a deflecting unit, by means of which the transmitted light beams are periodically deflected and guided over the surface of the object, wherein the height profile of the object is determined in an evaluating unit from the distance values at the output of the distance sensor and from the associated deflecting angles of the transmitted light beams, wherein the deflecting unit comprises a transmitting optical system, which is arranged downstream of the transmitter, and an actuator, which for deflection of the transmitted light beams periodically deflects the transmitting optical system, and wherein a receiving optical system is disposed upstream of the receiver and is arranged at a spacing from the transmitting optical system so that the beam axes of the transmitted light beams passing through the transmitting optical system and the received light beams passing through the receiving optical system run at a spacing from one another, **characterised in that** the receiving optical system (8) is deflected together with the transmitting optical system (7) by way of the actuator (18), wherein the transmitting optical system (7) and the receiving optical system (8) are mounted with parallelly extending optical axes in a holder (19) which is deflected by way of the actuator (18) and that the actuator (18) comprises a motor-driven eccentric disc (34), the edge of which lies in a recess (33) of the holder (19), wherein the holder (19) is deflected transversely to the beam axes of the transmitted light beams (3) by the movement of the eccentric disc (34).

2. Optoelectronic device according to claim 1, **characterised in that** the eccentric disc (34) is driven by means of a direct current motor and thereby executes a continuous rotational movement.

3. Optoelectronic device according to claim 1, **characterised in that** the eccentric disc (34) is driven by means of a step motor and is thereby periodically moved within a predetermined angular range.

4. Optoelectronic device according to any one of claims 1 to 3, **characterised in that** the holder (19) has a front pane (28) in which the transmitting optical system (7) and the receiving optical system (8) are respectively mounted in a recess (33) at a spacing to be adjacent to one another.

5. Optoelectronic device according to claim 4, **characterised in that** struts (30), which extend at a spacing from one another and the free ends of which are connected by way of web (31) to which the actuator (18) is fastened, open out at the rear side of the front pane (28) of the holder (19).

6. Optoelectronic device according to claim 5, **characterised in that** the struts (30) open out substantially at a right angle to the front pane (28) of the holder (19) and that the longitudinal axes of the front pane (28) and of the web (31) run parallel to one another.

7. Optoelectronic device according to any one of claims 1 to 6, **characterised in that** the holder (19) is formed by a plastics material injection-moulded part.

8. Optoelectronic device according to any one of claims 1 to 7, **characterised in that** the holder (19) is movably mounted at a mount by means of leaf springs (32).

9. Optoelectronic device according to claim 8, **characterised in that** the leaf springs (32) are formed by bendable plate parts with rectangular cross-section, the planar upper and lower sides of which respectively extend substantially perpendicularly to the front pane (28) of the holder (19).

10. Optoelectronic device according to one of claims 8 and 9, **characterised in that** the mount to which the leaf springs (32) are fastened is formed by a plate (27) extending parallel to the front wall of the holder (19).

11. Optoelectronic device according to any one of claims 4 to 10, **characterised in that** this is integrated in a housing (2), wherein the front pane (28) of the holder (19) is arranged to lie behind the front wall of the housing (2), in which two outlet windows (20) are formed, wherein a respective outlet window (20) lies opposite each of the transmitting optical system (7) and the receiving optical system (8).

12. Optoelectronic device according to claim 11, **characterised in that** the sizes of the outlet windows (20) are matched to the diameters of the transmitting optical system (7) and the receiving optical system (8) as well as the maximum displacement paths thereof, so that in every position of the holder (19) in each instance at least almost the entire area of the transmitting optical system (7) and receiving optical system (8) is arranged to lie behind the outlet window (20).

13. Optoelectronic device according to any one of claims 1 to 12, **characterised in that** an angular range of approximately ± 6° is covered by the transmitted light beams (3).

14. Optoelectronic device according to any one of claims 1 to 13, **characterised in that** for determination of the instantaneous deflection angle of the transmitted light beams (3) of the position of the actuator (18) is detectable by means of a sensor.

15. Optoelectronic device according to claim 14, **characterised in that** the sensor is formed by a light barrier.

16. Optoelectronic device according to claim 14, **characterised in that** the sensor is formed by a Hall sensor, by which a permanent magnet (24) arranged on the actuator (18) is detectable.

17. Optoelectronic device according to claim 16, **characterised in that** the Hall sensor (25) is mounted together with an evaluating electronic system on the plate (27) for fastening of the leaf springs (32).

18. Optoelectronic device according to any one of claims 1 to 17, **characterised in that** the transmitter (4) emits transmitted light pulses, wherein the transit times of the transmitted light beams to the object are determined for the distance measurement.

19. Optoelectronic device according to any one of claims 1 to 18, **characterised in that** the received light beams (5) are coupled into an optical fibre (11), wherein the transmitted light beams (5) are led in the optical fibre (11) to the receiver (6) surrounded by an electric shield (15).

20. Optoelectronic device according to any one of claims 1 to 19, **characterised in that** the transmitter (4), the receiver (6) and electronic components of the evaluating unit (16) are arranged on a circuitboard (17) seated on the housing base.

21. Optoelectronic device according to any one of claims 11 to 20, **characterised in that** elements of the actuator (18) are seated on the housing base.

22. Optoelectronic device according to one of claims 20 and 21, **characterised in that** the housing (2) consists of metal.

## Revendications

1. Dispositif opto-électronique servant à déterminer le profil en hauteur d'un objet, comprenant un capteur de distance présentant un émetteur émettant des rayons lumineux d'émission et un récepteur recevant des rayons lumineux de réception et comprenant une unité de déviation au moyen de laquelle les rayons lumineux d'émission sont déviés périodiquement et guidés sur la surface de l'objet, le profil en hauteur de l'objet étant déterminé dans une unité d'évaluation à partir des valeurs de distance à la sortie du capteur de distance et des angles de déviation associés des rayons lumineux d'émission, l'unité de déviation présentant une optique d'émission disposée après l'émetteur et un actionneur, lequel dévie périodiquement l'optique d'émission pour dévier les rayons lumineux d'émission, une optique de réception étant disposée avant le récepteur, laquelle est disposée à distance de l'optique d'émission de sorte que les axes de rayon des rayons lumineux d'émission traversant l'optique d'émission et des rayons lumineux de réception traversant l'optique de réception s'étendent à distance l'un de l'autre, **caractérisé en ce que** l'optique de réception (8) est déviée en commun avec l'optique d'émission (7) par l'actionneur (18), l'optique d'émission (7) et l'optique de réception (8) étant montées avec leurs axes optiques s'étendant parallèlement dans un support (19) qui est dévié par l'actionneur (18), et que l'actionneur (18) présente un disque excentrique (34) entraîné par moteur, dont le bord est en appui dans un évidement (33) du support (19), le support (19) étant dévié transversalement à l'axe de rayon des rayons lumineux d'émission (3) par le mouvement du disque excentrique (34).

2. Dispositif opto-électronique selon la revendication 1, **caractérisé en ce que** le disque excentrique (34) est entraîné au moyen d'un moteur à courant continu et effectue de ce fait un mouvement de rotation continu.

3. Dispositif opto-électronique selon la revendication 1, **caractérisé en ce que** le disque excentrique (34) est entraîné au moyen d'un moteur pas à pas et de ce fait déplacé périodiquement à l'intérieur d'une plage angulaire prédéfinie.

4. Dispositif opto-électronique selon une des revendications 1 à 3, **caractérisé en ce que** le support (19) présente un disque frontal (28) dans lequel l'optique d'émission (7) et l'optique de réception (8) sont montées à distance l'une à côté de l'autre chaque fois dans un évidement (33).

5. Dispositif opto-électronique selon la revendication 4, **caractérisé en ce que** sur la face arrière du disque frontal (28) du support (19) aboutissent des entretoises (30) s'étendant à distance l'une de l'autre, dont les extrémités libres sont reliées par une branche (31) sur laquelle est fixé l'actionneur (18).

6. Dispositif opto-électronique selon la revendication 5, **caractérisé en ce que** les entretoises (30) aboutissent essentiellement à angle droit sur le disque frontal (28) du support (19), et que les axes longitudinaux du disque frontal (28) et de la branche (31) s'étendent parallèlement l'un à l'autre.

7. Dispositif opto-électronique selon une des revendications 1 à 6, **caractérisé en ce que** le support (19) est formé par une pièce moulée par injection en matière plastique.

8. Dispositif opto-électronique selon une des revendications 1 à 7, **caractérisé en ce que** le support (19) est monté mobile sur un élément de réception au moyen de ressorts à lame (32).

9. Dispositif opto-électronique selon la revendication 8, **caractérisé en ce que** les ressorts à lame (32) sont formés par des pièces en tôle flexibles de section rectangulaire, dont les faces supérieure et inférieure s'étendent chaque fois essentiellement perpendiculairement au disque frontal (28) du support (19).

10. Dispositif opto-électronique selon une des revendications 8 ou 9, **caractérisé en ce que** l'élément de réception sur lequel les ressorts à lame (32) sont fixés est formé par une plaque (27) s'étendant parallèlement à la paroi frontale du support (19).

11. Dispositif opto-électronique selon une des revendications 4 à 10, **caractérisé en ce que** celui-ci est intégré dans un boîtier (2), le disque frontal (28) du support (19) étant disposé à plat derrière la paroi frontale du boîtier (2) dans laquelle sont logées deux fenêtres de sortie (20), les fenêtres de sortie (20) étant respectivement situées en face de l'optique d'émission (7) et de l'optique de réception (8).

12. Dispositif opto-électronique selon la revendication 11, **caractérisé en ce que** les tailles des fenêtres de sortie (20) sont adaptées aux diamètres de l'optique d'émission (7) et de l'optique de réception (8) ainsi qu'à leur course de déplacement maximale, de sorte que dans toute position du support (19) chaque fois au moins presque toute la surface de l'optique d'émission (7) et de réception (8) est disposée à plat derrière la fenêtre de sortie (20).

13. Dispositif opto-électronique selon une des revendications 1 à 12, **caractérisé en ce que** les rayons lumineux d'émission (3) balayent une plage angulaire d'environ ± 6°.

14. Dispositif opto-électronique selon une des revendications 1 à 13, **caractérisé en ce que** pour déterminer l'angle de déviation momentané des rayons lumineux d'émission (3), la position de l'actionneur (18) peut être détectée au moyen d'un capteur.

15. Dispositif opto-électronique selon la revendication 14, **caractérisé en ce que** le capteur est formé par une barrière lumineuse.

16. Dispositif opto-électronique selon la revendication 14, **caractérisé en ce que** le capteur est formé par un capteur à effet Hall au moyen duquel un aimant permanent (24) disposé sur l'actionneur (18) peut être détecté.

17. Dispositif opto-électronique selon la revendication 16, **caractérisé en ce que** le capteur à effet Hall (25) est monté avec une électronique d'évaluation sur la plaque (27) de fixation des ressorts à lame (32).

18. Dispositif opto-électronique selon une des revendications 1 à 17, **caractérisé en ce que** l'émetteur (4) émet des impulsions lumineuses d'émission, les temps de parcours des rayons lumineux d'émission vers l'objet étant déterminés pour mesurer la distance.

19. Dispositif opto-électronique selon une des revendications 1 à 18, **caractérisé en ce que** les rayons lumineux de réception (5) sont injectés dans une fibre conductrice de lumière (11), les rayons lumineux de réception (5) étant conduits dans la fibre conductrice de lumière (11) vers le récepteur (6) entouré par un blindage électrique (15).

20. Dispositif opto-électronique selon une des revendications 1 à 19, **caractérisé en ce que** l'émetteur (4), le récepteur (6) et des composants électroniques de l'unité d'évaluation (16) sont disposés sur une carte de circuit imprimé (17) qui est posée sur le fond du boîtier.

21. Dispositif opto-électronique selon une des revendications 11 à 20, **caractérisé en ce que** des éléments de l'actionneur (18) sont posés sur le fond du boîtier.

22. Dispositif opto-électronique selon une des revendications 20 ou 21, **caractérisé en ce que** le boîtier (2) est en métal.
